# FASCICULE DE BREVET EUROPEEN

(11) **EP 1 587 773 B1**
(45) Date de publication et mention de la délivrance du brevet: **03.01.2007**
(21) Numéro de dépôt: 04706209.6
(22) Date de dépôt: 29.01.2004
(51) Int. Cl.: C04B 41/87, C04B 41/91, C04B 37/00

(54) **PROCEDE POUR LE TRAITEMENT DE SURFACE D UNE PIECE EN MATERIAU COMPOSITE THERMOSTRUCTURAL ET APPLICATION AU BRASAGE DE PIECES EN MATERIAU COMPOSITE THERMOSTRUCTURAL**
VERFAHREN ZUR BEHANDLUNG DER OBERFLÄCHE EINES TEILS AUS EINEM WÄRMESTRUKTURIERTEN VERBUNDWERKSTOFF UND VERWENDUNG DAVON BEIM HARTVERLÖTEN VON TEILEN AUS EINEM WÄRMESTRUKTURIERTEN VERBUNDWERKSTOFF
METHOD FOR TREATING THE SURFACE OF A PART MADE OF A HEAT-STRUCTURED COMPOSITE MATERIAL AND USE THEREOF IN BRAZING PARTS MADE OF A HEAT-STRUCTURED COMPOSITE MATERIAL

(30) Priorité: 30.01.2003 FR 0301039
(43) Date de publication de la demande: 26.10.2005
(73) Titulaire: Snecma Propulsion Solide, 33187 Le Haillan Cedex (FR)
(72) Inventeur: THEBAULT, Jacques, F-33200 Bordeaux (FR)
(74) Mandataire: Joly, Jean-Jacques
(86) Numéro de dépôt international: PCT/FR2004/000202
(87) Numéro de publication internationale: WO 2004/069769

(56) Documents cités:
- WO-A-92/19567
- FR-A- 2 749 787

## Description

### Arrière-plan de l'invention

Les matériaux composites thermostructuraux sont connus pour leurs bonnes propriétés mécaniques et leur capacité à conserver ces propriétés à température élevée. Ils comprennent les matériaux composites carbone/carbone (C/C) formés d'un renfort en fibres de carbone densifié par une matrice en carbone et les matériaux composites à matrice céramique (CMC) formés d'un renfort en fibres réfractaires (carbone ou céramique) densifiés par une matrice au moins partiellement céramique. Des exemples de CMC sont les composites C/SiC (renfort en fibres de carbone et matrice en carbure de silicium), les composites C/C-SiC (renfort en fibres de carbone et matrice comprenant une phase carbone, généralement au plus près des fibres, et une phase carbure de silicium) et les composites SiC/SiC (fibres de renfort et matrice en carbure de silicium). Une couche d'interphase peut être interposée entre fibres de renfort et matrice pour améliorer la tenue mécanique du matériau.

Les procédés usuels d'obtention de pièces en matériau composite thermostructural sont le procédé par voie liquide et le procédé par voie gazeuse.

Le procédé par voie liquide consiste à réaliser une préforme fibreuse ayant sensiblement la forme d'une pièce à réaliser, et destinée à constituer le renfort du matériau composite, et à imprégner cette préforme par une composition liquide contenant un précurseur du matériau de la matrice. Le précurseur se présente habituellement sous forme d'un polymère, tel qu'une résine, éventuellement dilué dans un solvant. La transformation du précurseur en céramique est réalisée par traitement thermique, après élimination du solvant éventuel et réticulation du polymère. Plusieurs cycles d'imprégnation successifs peuvent être réalisés pour parvenir au degré de densification souhaité. A titre d'exemple, des précurseurs liquides de carbone peuvent être des résines à taux de coke relativement élevé, telles que des résines phénoliques, tandis que des précurseurs liquides de céramique, notamment de Si, peuvent être des résines de type polycarbosilane (PCS) ou polytitanocarbosilane (PTCS).

Le procédé par voie gazeuse consiste dans l'infiltration chimique en phase vapeur. La préforme fibreuse correspondant à une pièce à réaliser est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la matrice par dépôt, au contact des fibres, d'un matériau solide résultant d'une décomposition d'un constituant de la phase gazeuse ou d'une réaction entre plusieurs constituants. A titre d'exemple, des précurseurs gazeux du carbone peuvent être des hydrocarbures tels que méthane et/ou propane donnant le carbone par craquage, et un précurseur gazeux de céramique, notamment de SiC, peut être du méthyltrichlorosilane (MTS) donnant du SiC par décomposition du MTS.

En raison de leurs propriétés, les matériaux composites thermostructuraux trouvent des applications dans divers domaines, pour réaliser des pièces devant être soumises à des contraintes thermomécaniques importantes, par exemple dans les domaines aéronautique et spatial.

Toutefois, le fait que les matériaux composites thermostructuraux présentent inévitablement une porosité et présentent un aspect rugueux peut entraîner des limitations quant aux utilisations possibles.

La porosité vient du caractère inévitablement incomplet de la densification des préformes fibreuses. Elle se traduit par la présence de pores de plus ou moins grandes dimensions qui communiquent entre eux. Il en résulte que les pièces en matériau composite thermostructural ne sont pas étanches, ce qui interdit de les utiliser en l'état pour réaliser des parois refroidies par circulation de fluide, par exemple des éléments de parois de tuyère de propulseur fusée ou des éléments de parois de chambres de combustion de turbines à gaz, ou encore des éléments de parois de chambre de confinement de plasma dans un réacteur de fusion nucléaire.

L'aspect de surface rugueux se traduit par la présence d'irrégularités de surface. Celles-ci ne permettent pas d'avoir la précision géométrique souhaitée dans le cas où des pièces doivent être assemblées par brasage pour former une pièce de forme plus complexe.

Des traitements de surface de pièces en matériau composite thermostructural sont connus, essentiellement pour améliorer la tenue de ceux-ci en atmosphère oxydante. On cherche alors à obturer la porosité de surface du matériau pour éviter une dégradation du matériau par oxydation du carbone qui peut être présent dans le renfort fibreux ou la matrice, ou du carbone ou nitrure de bore qui peut être présent au niveau d'une interphase entre fibres et matrice.

Parmi les nombreux traitements de protection anti-oxydation connus, il est proposé dans le document WO 92/19567 d'appliquer sur la surface d'une pièce à protéger une composition liquide contenant un polymère précurseur de céramique et une poudre de céramique, de réticuler le polymère, de transformer le polymère précurseur en céramique par traitement thermique, et de former ensuite un dépôt de céramique par infiltration chimique en phase vapeur.

Un tel procédé ne convient pas lorsque l'état de surface d'une pièce en matériau composite doit être contrôlé en respectant des tolérances dimensionnelles, notamment en respectant la géométrie initiale de la pièce. Cela est important lorsque la pièce doit être assemblée avec une ou plusieurs autres pièces, ou doit présenter une géométrie de surface précise, par exemple ayant un aspect miroir.

### Objet et résumé de l'invention

L'invention a pour but de fournir un procédé ne présentant pas l'inconvénient précité pour l'obtention de pièces en matériau composite thermostructural avec un état de surface maîtrisé, notamment une surface étanche ou une surface d'aspect lisse respectant une précision dimensionnelle.

Ce but est atteint avec un procédé comprenant l'application sur la surface de la pièce d'une composition liquide contenant un polymère précurseur de céramique et une charge solide réfractaire, la réticulation du polymère, la transformation du polymère réticulé en céramique par traitement thermique et la formation ensuite d'un dépôt de céramique par infiltration chimique en phase vapeur, procédé dans lequel, conformément à l'invention, avant l'étape d'infiltration chimique en phase vapeur, la surface de la pièce est arasée pour revenir sensiblement à la géométrie initiale de la pièce en matériau composite de manière à former, par infiltration chimique en phase vapeur, un dépôt qui obture la microporosité résiduelle à la surface arasée de la pièce.

Ainsi, le procédé présente l'avantage de s'affranchir, par l'étape d'arasage, de l'imprécision dimensionnelle résultant de l'application de la composition liquide suivie de la transformation du précurseur. En effet, la régularité du dépôt produit par application de la composition liquide (dépôt par voie liquide) est très difficile à assurer et se traduit par une surépaisseur variable par rapport à la dimension initiale de la pièce en matériau composite. En revenant à cette dimension initiale avant l'étape d'infiltration chimique en phase vapeur qui conduit à un dépôt uniforme aisément maîtrisable, le procédé conforme à l'invention permet non seulement de réaliser une étanchéité, mais aussi de résoudre le problème de contrôle dimensionnel. Le dépôt produit par voie liquide a ainsi pour fonctions de réduire la porosité du matériau composite et de combler des irrégularités de surface, notamment en occupant des macroporosités ou reliefs en creux au voisinage de la surface. Il ne se traduit pas par une surépaisseur relativement importante sur toute la surface du matériau composite de sorte que le dépôt subséquent réalisé par infiltration chimique en phase vapeur peut s'ancrer jusque dans la porosité du matériau composite et donc s'accrocher solidement.

L'arasage de la pièce est de préférence réalisé après réticulation du précurseur de céramique, et même après céramisation de celui-ci par traitement thermique.

En variante, l'arasage peut être réalisé après application de la composition liquide, et avant réticulation du polymère précurseur de céramique.

Le procédé selon l'invention est applicable plus particulièrement au traitement de surface de pièces en matériau composite à matrice céramique, en particulier en matériau composite C/SiC ou SiC/SiC.

La composition liquide comprend de préférence un solvant polymère du précurseur de céramique, la quantité de solvant étant choisie notamment pour ajuster la viscosité de la composition.

La composition liquide peut être appliquée à la brosse, ou pinceau, ou par autre procédé, par exemple par pistolettage. Elle peut être appliquée en plusieurs couches successives. Après chaque couche, on peut procéder à une réticulation intermédiaire du polymère précurseur de céramique et éventuellement à une céramisation du polymère réticulé.

Le matériau céramique obtenu par voie liquide peut être SiC, le polymère précurseur de céramique pouvant alors être choisi parmi le PCS et le PTCS, précurseurs de SiC ou encore parmi des silicones. D'autres matériaux céramiques peuvent être obtenus par voie liquide tels que du nitrure de silicium Si₃N₄ à partir de polysilazane pyrolysé sous gaz ammoniac ou du nitrure de bore BN à partir de polyborazine.

La charge solide peut comporter une poudre réfractaire, notamment une poudre de céramique telle qu'une poudre de carbure (notamment de SiC); de nitrure ou de borure. La granulométrie de la poudre est choisie de manière que les grains aient une dimension moyenne de préférence inférieure à 100 microns, par exemple comprise entre 5 et 50 microns.

La granulométrie est en effet choisie de manière que les grains de poudre aient une dimension suffisamment petite pour pénétrer dans la porosité superficielle du matériau composite, mais toutefois pas trop petite pour ne pas obturer cette porosité d'une telle façon que la diffusion de gaz au sein de la porosité soit gênée voire empêchée lors de l'étape subséquente d'infiltration chimique en phase vapeur. De la sorte, un bon accrochage du revêtement formé lors de cette étape ultérieure d'infiltration chimique en phase vapeur peut être obtenu par ancrage dans la porosité du matériau. Selon une particularité avantageuse du procédé, on utilise un mélange de poudres céramiques ayant au moins deux granulométries moyennes différentes afin de répondre à ces conditions.

La quantité en masse de charge solide dans la composition liquide est de préférence comprise entre 0,4 et 4 fois la quantité en masse de polymère précurseur de céramique.

Lorsque l'on désire réaliser un traitement de l'intégralité de la surface d'une pièce, notamment pour lui conférer une étanchéité totale, on peut procéder de la manière suivante pour l'étape d'infiltration chimique en phase vapeur :
- mise en place de la pièce sur un ou plusieurs supports munis d'une couche de séparation en un matériau de moindre résistance mécanique que le matériau céramique obtenu par infiltration chimique en phase vapeur, la couche de séparation étant surmontée d'une couche de continuité réalisée dans ledit matériau céramique,
- réalisation de l'infiltration chimique en phase vapeur, et
- séparation de la pièce du ou des supports par rupture au sein de la couche de séparation, la continuité du dépôt céramique au niveau de la ou de chaque zone de supportage étant assurée par le matériau céramique de la couche de continuité restant en place sur la pièce.

La couche de séparation peut être en un matériau à structure feuilletée, la séparation entre support et pièce étant réalisée par clivage au sein du matériau à structure feuilletée. Ce dernier peut être choisi parmi du carbone pyrolytique de type laminaire, du nitrure de bore à structure hexagonale, du graphite feuilleté ou des matériaux silicoalumineux à structure lamellaire tels que talcs et argiles.

Le dépôt céramique formé par infiltration chimique en phase vapeur peut être en un matériau choisi parmi SiC, Si₃N₄ ou alumine Al₂O₃, par exemple.

L'invention a aussi pour objet de fournir un procédé de brasage de pièces en matériau composite thermostructural.

Ce but est atteint grâce à un procédé de brasage selon lequel on réalise un traitement par un procédé tel que défini plus haut, sur au moins les surfaces à assembler des pièces, avant interposition de brasure entre ces surfaces et réalisation du brasage.

Le traitement de surface réalisé préalablement sur les pièces permet de conférer la précision dimensionnelle requise pour une bonne liaison par brasage, et de réaliser l'étanchéité souhaitable pour éviter un écoulement de la brasure dans la porosité du matériau composite. La quantité de brasure peut alors être précisément réglée en fonction des besoins.

### Brève description des dessins

L'invention sera mieux comprise à la lecture de la description faite ci-après, à titre indicatif mais non limitatif. Il sera fait en référence aux dessins annexés sur lesquels :
- la figure 1 est un ordinogramme illustrant des étapes successives d'un mode de mise en oeuvre d'un procédé conforme à l'invention ;
- les figures 2 à 4 sont des schémas illustrant la mise en oeuvre du procédé à la surface d'une pièce en matériau composite thermostructural ;
- les figures 5 et 6 sont des ordinogrammes illustrant des étapes successives de variantes de mise en oeuvre d'un procédé conforme à l'invention ;
- la figure 7 illustre une application d'un procédé selon l'invention pour le brasage de pièces étanchéifiées ;
- la figure 8 est une vue de détail au niveau du contact entre une pièce et un support, selon un mode particulier de réalisation du procédé ;
- la figure 9 est une vue analogue à celle de la figure 8, après formation de dépôt céramique par infiltration chimique en phase vapeur ;
- la figure 10 est une vue analogue à celle de la figure 9, après séparation entre le support et la pièce ; et
- la figure 11 est une photographie prise au microscope électronique à balayage montrant une partie de surface d'un échantillon en matériau composite thermostructural traité conformément à l'invention.

### Description détaillée de mode de réalisation

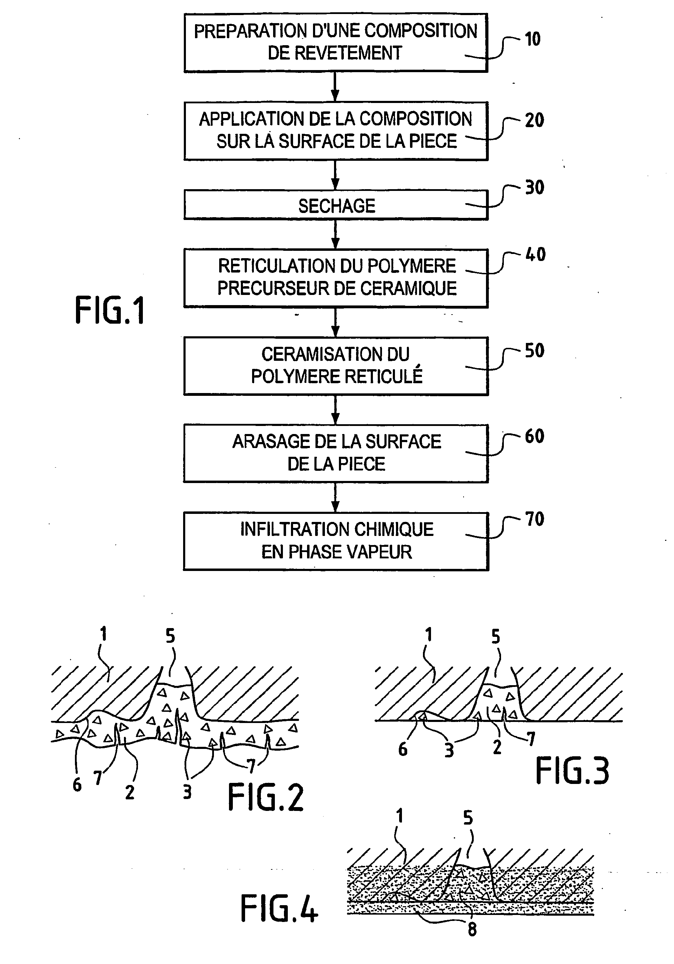

En référence à la figure 1, un mode de mise en oeuvre d'un procédé conforme à l'invention, pour le traitement de surface d'une pièce en matériau composite thermostructural, comprend les étapes suivantes.

Une composition de revêtement est préparée (étape 10) qui comprend une charge solide réfractaire sous forme d'une poudre, notamment en céramique, un polymère précurseur de céramique et un solvant éventuel du polymère.

La poudre est par exemple une poudre de SiC. La granulométrie est choisie suffisamment fine pour permettre aux grains de poudre de pénétrer dans la porosité superficielle à combler du matériau composite thermostructural. La granulométrie n'est toutefois par choisie trop fine pour éviter un colmatage tel de la porosité superficielle que la diffusion des gaz dans la porosité du matériau composite soit entravée lors d'une étape ultérieure d'infiltration chimique en phase vapeur. De la sorte, un bon accrochage du revêtement formé lors de cette étape ultérieure d'infiltration chimique en phase vapeur peut être obtenu par ancrage dans la porosité du matériau. De préférence, la taille moyenne des grains est alors choisie inférieure à 100 microns, par exemple comprise entre 5 microns et 50 microns. On pourra utiliser des poudres de granulométries différentes, les grains plus petits contribuant à une bonne réduction de la porosité superficielle et les grains plus gros contribuant à laisser des passages pour la diffusion des gaz. Par exemple, on peut utiliser des grains de taille moyenne comprise entre 5 microns et 15 microns en association avec des grains de taille moyenne comprise entre 25 microns et 50 microns, la proportion en masse de grains de plus grande taille moyenne étant par exemple au moins égale à celle des grains de plus petite taille moyenne.

D'autres poudres notamment en céramique peuvent être utilisées, ayant sensiblement même granulométrie, par exemple choisies parmi des poudres de carbure (autre que SiC), nitrure ou borure, des poudres de différentes natures pouvant être mélangées.

Dans le cas où le matériau thermostructural est un composite C/C, l'utilisation d'une poudre ayant un coefficient de dilatation plus faible que SiC, par exemple une poudre de Si₃N₄ peut être envisagée afin de s'adapter au matériau sous-jacent et limiter le risque de fissuration.

Le polymère précurseur de céramique est choisi en fonction de la nature du revêtement désiré. Dans le cas d'un revêtement en SiC, le polymère est choisi par exemple parmi le polycarbosilane (PCS) et le polytitanocarbosilane (PTCS).

D'autres polymères précurseurs de céramique sont utilisables, par exemple des silicones qui sont des précurseurs de SiC (ou SiC+C, avec carbone en excès),des polysilazanes qui, pyrolysés sous gaz amomniac, permettent d'obtenir Si₃N₄ et des polyborazines, précurseurs de BN.

On notera que la céramique constitutive des charges solides et celle dont le polymère est précurseur sont de préférence, mais non nécessairement, de même nature.

Le solvant est déterminé en fonction du polymère précurseur de céramique utilisé. Dans le cas du PCS, par exemple, le solvant peut être du xylène. D'autres solvants sont utilisables pour d'autres polymères, par exemple l'heptane, l'hexane ou l'éthanol pour des silicones.

La quantité de charge solide, par rapport à celle du polymère précurseur de céramique est choisie pour assurer un comblement satisfaisant de la porosité superficielle du matériau composite thermostructural, tout en permettant à la composition de pénétrer sur une certaine profondeur. Ainsi, la quantité en masse de charge solide est de préférence comprise entre 0,4 fois et 4 fois la quantité en masse de polymère précurseur de céramique.

La quantité de solvant utilisé est choisie pour conférer la viscosité appropriée à la composition liquide en vue de son application à la surface de la pièce.

A titre d'exemple, une composition typique pour une composition destinée à la formation d'un revêtement SiC peut être choisie dans les limites suivantes :

| | |
|---|---|
| Poudre de SiC (granulométrie moyenne comprise entre 5 et 50 microns) | : entre 2 et 7 parties en poids |
| PCS (précurseur de SiC) | : entre 1 et 3 parties en poids |
| Xylène (solvant du PCS) | : entre 2 et 5 parties en poids |

La composition liquide est appliquée sur la surface à traiter de la pièce (étape 20).

L'application peut être simplement réalisée à la brosse, ou pinceau. On pourra utiliser d'autres méthodes, par exemple le pistollettage.

Après séchage (étape 30), par exemple à l'air chaud, pour éliminer le solvant, on procède à la réticulation du polymère précurseur de céramique (étape 40). La réticulation peut être réalisée par traitement thermique. Dans le cas par exemple du PCS, la température est progressivement élevée jusqu'à un palier d'environ 350°C.

Le polymère réticulé est soumis à un traitement thermique aux fins de céramisation (étape 50). Dans le cas du PCS, la transformation en SiC est réalisée en élevant progressivement la température jusqu'à un palier d'environ 900°C.

Plusieurs couches successives de composition liquide peuvent être appliquées. Après application de chaque couche, on procède de préférence au moins au séchage de la composition et à la réticulation du polymère précurseur de céramique. La céramisation peut être réalisée simultanément pour toutes les couches.

Bien entendu, les conditions de réticulation et de céramisation pourront être différentes avec d'autres précurseurs de céramiques, ces conditions ne présentant aucun caractère original.

Comme le montre très schématiquement la figure 2, on obtient alors un revêtement céramique comprenant une phase 2 issue de la céramisation du précurseur de céramique et une charge solide 3. Ce revêtement obture à la fois des macroporosités débouchantes du matériau de la pièce 1, telle que la macroporosité 5, sur une certaine profondeur à partir de la surface de la pièce, et des creux superficiels, tel que le creux 6. Le revêtement recouvre également la surface initiale de la pièce 1. Des fissures 7 peuvent être présentes dans le revêtement.

Après céramisation, on procède à un arasage de la surface de la pièce (étape 60) pour revenir à la géométrie initiale de celle-ci, c'est-à-dire au niveau de l'enveloppe de sa surface extérieure initiale, comme montré par la figure 3. L'arasage peut être réalisé par ponçage, le résidu de céramisation du polymère précurseur de céramique additionné de charges solides étant friable.

La pièce présente toujours une porosité résiduelle au voisinage de sa surface, mais sa porosité initiale a été modifiée par comblement au moins partiel de microporosités et fractionnement de macroporosités. En outre, les irrégularités de surface ont été comblées.

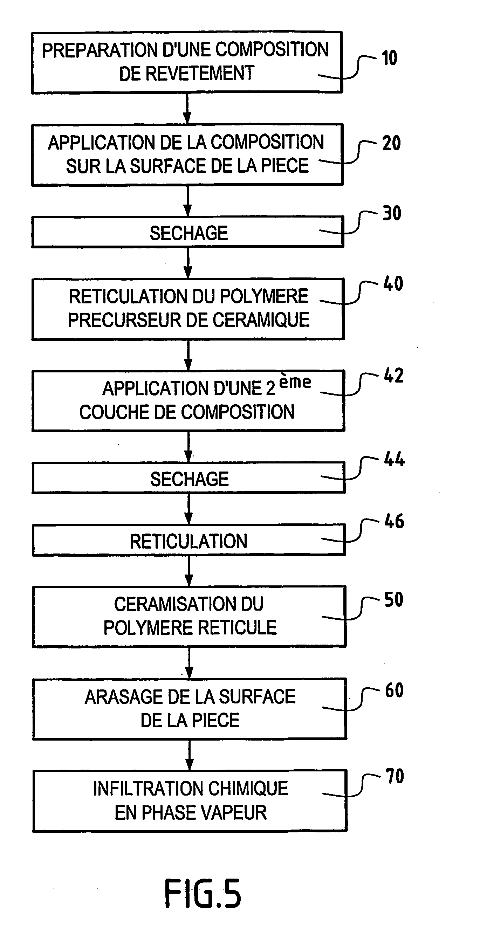

Après arasage, on procède à un dépôt de céramique par infiltration chimique en phase vapeur (étape 70). Ce dépôt permet de combler la porosité résiduelle, de consolider l'ensemble formé par la phase issue de la céramisation du précurseur et la charge solide, et de former un revêtement uniforme de céramique qui réalise une étanchéification de la surface de la pièce, comme montré par la figure 4 où la référence 8 désigne la céramique formée par infiltration chimique en phase vapeur.

Du fait que la rugosité initiale de la pièce a été en grande partie compensée, on peut obtenir un revêtement d'aspect lisse sans nécessiter une épaisseur importante de dépôt. Cette épaisseur est de préférence inférieure à 200 microns, par exemple comprise entre 25 microns et 150 microns. En outre, le processus d'infiltration chimique en phase vapeur permet l'obtention d'un dépôt d'épaisseur uniforme contrôlable, d'où la possibilité de maîtriser précisément la dimension finale de la pièce. Un ajustement de la dimension finale est possible par exemple par polissage, lequel polissage peut donner un aspect miroir à la surface de la pièce. On notera encore que le dépôt obtenu par infiltration chimique en phase vapeur s'ancre non seulement dans le dépôt obtenu par voie liquide, mais aussi dans la porosité du matériau composite. La présence de charge solide et de fissures 7 favorise la diffusion de la phase gazeuse réactionnelle.

Les natures des phases gazeuses réactionnelles et conditions de pression et de température nécessaires pour obtenir des dépôts de céramiques diverses par infiltration chimique en phase vapeur sont bien connues en elles-mêmes.

Dans le cas d'un dépôt SiC, on peut utiliser, comme bien connu en soi, une phase gazeuse contenant du méthyltrichlorosilane (MTS) en tant que précurseur du SiC et du gaz hydrogène (H₂) agissant comme gaz vecteur pour favoriser la diffusion au sein de la porosité de la pièce.

La figure 5 concerne une variante de mise en oeuvre du procédé qui diffère de celle de la figure 1 en ce que la composition liquide est appliquée en deux couches successives. Ainsi, après l'étape de réticulation 40, on procède à une série d'étapes 42 de deuxième application de la composition, 44 de séchage et 46 de réticulation avant l'étape 50 de céramisation.

La réticulation du polymère précurseur de céramique, avant application d'une deuxième couche est préférable, pour éviter une dissolution de la couche précédente lors de l'application de cette deuxième couche, mais non nécessaire.

On pourrait aussi appliquer la deuxième couche après céramisation de la première. Bien entendu, plus de deux couches pourront être appliquées.

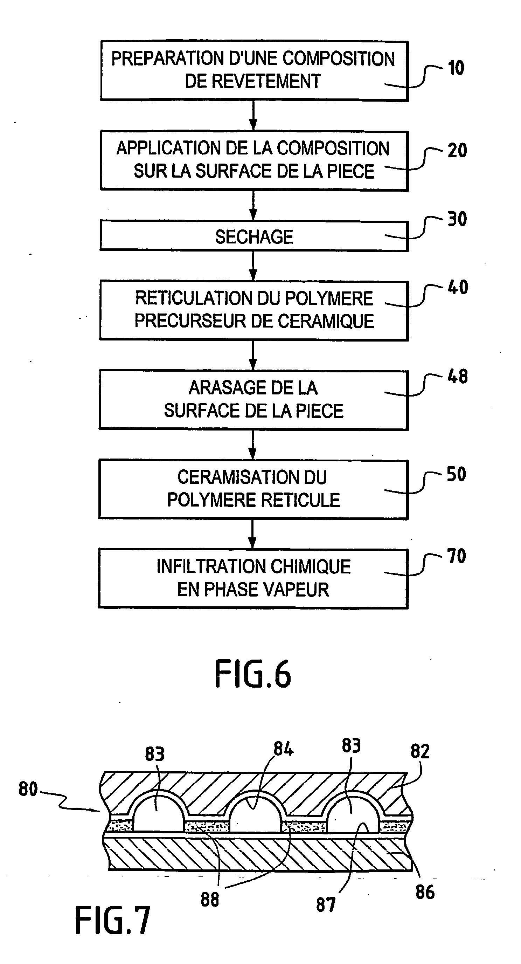

La figure 6 concerne une autre variante de mise en oeuvre du procédé qui diffère de celle de la figure 1 en ce que l'étape d'arasage 48 est réalisée après l'étape 40 de réticulation et avant céramisation, l'étape 60 étant alors supprimée. On pourrait aussi envisager de réaliser l'arasage après l'étape 30 de séchage de la composition.

Une application déjà mentionnée du procédé est la réalisation de pièces dont une surface présente un aspect miroir. Les pièces sont typiquement en CMC, tel que C/SiC ou SiC/SiC avec traitement de la surface par formation d'un revêtement SiC par voie liquide, arasage, et dépôt de SiC par infiltration chimique en phase vapeur.

Une autre application est la réalisation de pièces en matériau composite thermostructural ayant au moins une partie de surface étanche.

Encore une autre application est la réalisation de pièces dont les dimensions sont précisément contrôlées pour permettre une liaison par brasage avec d'autres pièces.

La figure 7 illustre un exemple de réalisation d'une structure combinant ces deux dernières applications, en l'espèce une structure de paroi de divergent de tuyère de propulseur refroidie par circulation de fluide.

Cette structure 80 est formée de deux pièces 82, 86 en CMC, par exemple en SiC/SiC. L'une (82) des pièces a une surface dans laquelle sont formés des rainures ou évidements 83 destinés à constituer des canaux de circulation pour un fluide de refroidissement de la structure. La surface de la pièce 82 dans laquelle sont formés les canaux 83 est traitée conformément à l'invention pour former un revêtement d'étanchéification 84 d'épaisseur contrôlée, par exemple en SiC. L'autre pièce 86 a une surface également traitée conformément à l'invention pour former un revêtement d'étanchéification 87 d'épaisseur contrôlée de même nature que le revêtement 84 (les épaisseurs de revêtements 84 et 87 sont exagérées sur la figure 7). Les deux surfaces traitées sont accolées avec interposition d'une couche de brasure 88 et le brasage des pièces est réalisé par élévation de la température. Avec des revêtements 84, 87 en SiC, on peut utiliser une brasure à base de silicium telle que décrite dans les demandes de brevet FR 2 748 471 ou FR 2 749 787.

Le procédé de traitement conforme à l'invention est favorable à la préparation des pièces au brasage en ce qu'il permet, par le contrôle de géométrie des pièces, d'obtenir la précision voulue pour l'accostage des surfaces à assembler et en ce que l'écoulement de la brasure dans la porosité du matériau composite thermostructural est empêché par l'étanchéification des surfaces à assembler. La quantité de brasure peut donc être aisément contrôlée.

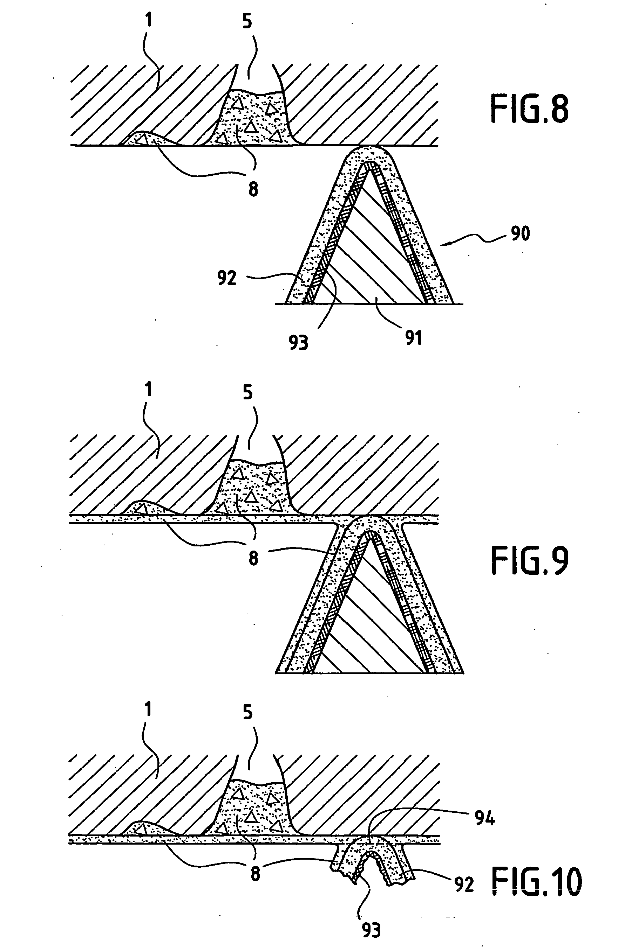

Les figures 8 à 10 illustrent une variante de mise oeuvre du procédé selon l'invention dans le cas où un dépôt céramique doit être formé par infiltration chimique en phase vapeur sur la surface totale de la pièce arasée.

La pièce 1, à l'état tel qu'illustré par la figure 3, est mise en place sur un ou plusieurs supports 90. Chaque support a une forme conique ou pyramidale offrant par son sommet une zone de contact de surface limitée avec la pièce 1. D'autres formes de supports sont envisageables, par exemple des barreaux prismatiques offrant une surface de contact limitée le long d'une arête.

Chaque support 90 comprend un substrat 91 en matériau réfractaire, par exemple en graphite ou en matériau composite thermostructural tel qu'un matériau composite C/C, et une couche externe 92 réalisée dans le même matériau céramique que celui du dépôt à former sur la pièce 1 par infiltration chimique en phase vapeur. La couche 92 est destinée à constituer une couche de continuité du dépôt céramique à réaliser. Une couche de séparation 93 en matériau réfractaire ayant une moindre résistance mécanique que la céramique de la couche 92 est interposée entre le substrat 91 et la couche 92.

La couche de séparation 93 définit une zone d'affaiblissement. Elle est avantageusement en un matériau à structure lamellaire, ou matériau clivable, tel que du carbone pyrolytique (PyC) de type laminaire, du nitrure de bore (BN) hexagonal, du graphite feuilleté ou autre matériau réfractaire tel que des silicoalumineux lamellaires, comme du talc ou des argiles.

Une couche de PyC ou BN peut être obtenue par dépôt ou infiltration chimique en phase vapeur. On pourra se référer au document EP 0 172 082 qui décrit la réalisation d'une interphase lamellaire PyC ou BN à faible résistance au cisaillement entre des fibres et une matrice d'un matériau composite thermostructural à fibres de renfort réfractaires et matrice céramique.

Une couche en BN ou en graphite feuilleté peut aussi être obtenue par projection (pulvérisation) puis lissage éventuel selon une technique connue utilisée notamment pour former une couche d'agent de démoulage sur la paroi d'un moule, par exemple avec le produit à base de BN commercialisé sous la dénomination "Pulvé Aéro A" par la société française "Acheson France".

Une couche de talc ou d'argile peut également être obtenue par projection sous forme finement divisée puis par lissage.

L'épaisseur de la couche 93 doit être suffisante pour permettre ultérieurement une séparation par rupture au sein de cette couche, sans endommagement de la couche 92 en céramique.

Cette épaisseur doit toutefois rester relativement limitée pour assurer une adhérence suffisante de la couche externe 92 jusqu'à séparation finale.

L'épaisseur de la couche 93 est choisie de préférence entre 0,1 micron et 20 microns, typiquement entre 0,5 micron et 5 microns.

La couche 92 en céramique est formée par dépôt ou infiltration chimique en phase vapeur. Son épaisseur est choisie au moins égale à celle du dépôt à former sur la pièce 1.

Après chargement dans un four, le dépôt céramique 8 est formé sur la pièce 1 et sur les faces latérales exposées du ou des supports 90, comme le montre la figure 9.

Après formation du dépôt 8, la pièce 1 est retirée du four avec le ou les supports 90, puis le ou chaque support 90 est séparé physiquement de la pièce 1. Du fait de la présence de la couche d'affaiblissement 93, la séparation entre support et pièce se fait au sein de cette couche 93, comme le montre la figure 10.

La continuité du dépôt céramique sur la pièce est assurée, au niveau de la zone de contact avec un support, par la couche 92 du support qui reste accrochée sur la pièce 1. La partie excédentaire de couche 92 peut ensuite éventuellement être éliminée par usinage (voir le trait interrompu 94 sur la figure 10), de sorte qu'un dépôt continu en céramique ayant une épaisseur sensiblement constante est formé sur toute la surface de la pièce 1.

Afin d'assurer une bonne adhérence entre la couche 92 et le dépôt 8, on réalise de préférence la couche 92 par un processus d'infiltration chimique en phase vapeur semblable à celui utilisé pour le dépôt 8, de manière à obtenir des dépôts de même structure. En outre, avant réalisation du dépôt 8, un traitement de surface peut être réalisé sur la surface de la couche externe 92, afin de la débarrasser de toute impureté et/ou d'un film de silice (SiO₂) qui s'y serait formé, afin de faciliter une liaison avec forte adhérence avec le dépôt 8.

Un tel traitement de surface peut consister en un traitement thermique, par exemple à une température de 1200°C à 1900°C sous vide secondaire. Un film de silice est éliminé par la réaction avec SiC, c'est-à-dire : SiC + 2SiO₂ → 3SiO + CO.

En variante, le traitement de surface est une attaque acide, par exemple par acide fluorhydrique (HF) également pour éliminer le film de SiO₂ de surface.

### Exemples

On a appliqué sur une surface d'échantillons en matériau composite thermostructural C/SiC deux couches d'une composition comprenant du polycarbosilane (PCS) dilué dans du xylène et une charge solide sous forme de poudres céramiques, en faisant varier la composition des poudres comme indiqué dans le tableau ci-dessous. A chaque fois, après application de la première couche, on a procédé à un séchage à l'air pour élimination du xylène et à une réticulation du PCS en élevant la température jusqu'à environ 350°C et, après application de la deuxième couche, aux mêmes étapes de séchage et de réticulation suivies d'une étape de céramisation de l'ensemble du PCS réticulé en élevant la température jusqu'à environ 900°C.

Le rapport massique entre PCS et xylène était à chaque fois égal à environ 2/3, tandis que le rapport massique entre la charge solide et le PCS était environ égal à 1.

**Tableau**

| Echantillon | Poudres utilisées | | Rapport massique |
|---|---|---|---|
| | Poudre 1 (granulométrie moyenne) | Poudre 2 (granulométrie moyenne) | Poudre 1/poudre 2 |
| 1 | SiC (37 µm) | SiC (9 µm) | 2,3 |
| 2 | SiC (37 µm) | HfB₂ (35 µm) | 1,4 |
| 3 | SiC (37 µm) | ZrB₂ (35 µm) | 0,8 |

Après céramisation, les surfaces des échantillons ont été arasées par ponçage au papier abrasif et on a procédé à un dépôt de SiC par infiltration chimique en phase vapeur avec une phase gazeuse réactionnelle contenant un mélange de MTS et de H₂. L'infiltration chimique en phase vapeur a été poursuivie jusqu'à ce que l'épaisseur du film de revêtement de surface SiC obtenue soit égale à environ 50 microns.

Un essai de traction arrachement a été effectué sur le revêtement SiC formé sur les surfaces des échantillons. Dans les trois cas, pour un effort à rupture d'environ 20 MPa, il a été constaté que la rupture se produisait au sein du matériau composite, confirmant l'excellent ancrage du revêtement à la surface du matériau.

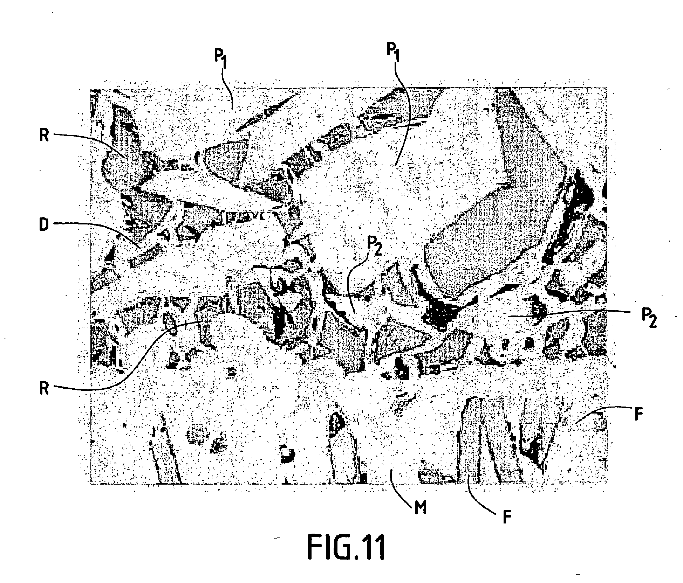

Cet ancrage peut être visualisé sur la photographie de la figure 11 qui montre une portion de surface de l'échantillon 1, après traitement de surface. Sur cette figure, on distingue les fibres F, la matrice M en SiC du matériau composite thermostructural, les poudres P₁, P₂ de granulométries différentes, le résidu R en SiC provenant de la céramisation du PCS et le dépôt D en SiC obtenu par infiltration chimique en phase vapeur.

On constate que l'ensemble formé par le résidu R de céramisation et les poudres P₁, P₂ réalise bien un comblement des porosités superficielles du matériau. On constate aussi que le dépôt D a été formé non seulement en surface mais aussi sur les parois des microporosités du matériau (voir flèches f).

## Revendications

1. Procédé pour le traitement de surface d'une pièce en matériau composite thermostructural présentant une surface poreuse et d'aspect rugueux, comprenant l'application sur la surface de la pièce d'une composition liquide contenant un polymère précurseur de céramique et une charge solide réfractaire, la réticulation du polymère, la transformation du polymère réticulé en céramique par traitement thermique et la formation ensuite d'un dépôt de céramique par infiltration chimique en phase vapeur, **caractérisé en ce que**, avant l'étape d'infiltration chimique en phase vapeur, la surface de la pièce est arasée pour-revenir à la géométrie initiale de la pièce en matériau composite de manière à former, par infiltration chimique en phase vapeur, un dépôt qui obture la microporosité résiduelle à la surface arasée de la pièce.

2. Procédé selon la revendication 1, **caractérisé en ce que** l'arasage est réalisé après réticulation du polymère précurseur.

3. Procédé selon la revendication 2, **caractérisé en ce que** l'arasage est réalisé après céramisation du polymère précurseur par traitement thermique.

4. Procédé selon la revendication 1, **caractérisé en ce que** l'arasage est réalisé après application de la composition liquide, et avant réticulation du précurseur de céramique.

5. Procédé selon l'une quelconque des revendications 1 à 4, **caractérisé en ce que** la composition liquide comprend un solvant du polymère précurseur de céramique.

6. Procédé selon l'une quelconque des revendications 1 à 5, **caractérisé en ce que** la composition liquide est appliquée en plusieurs couches.

7. Procédé selon l'une quelconque des revendications 1 à 6, **caractérisé en ce que** la charge solide comprend au moins une poudre réfractaire dont la granulométrie moyenne est inférieure à 100 microns.

8. Procédé selon la revendication 7, **caractérisé en ce que** la granulométrie moyenne de la poudre est comprise entre 5 microns et 50 microns.

9. Procédé selon l'une quelconque des revendications 1 à 8, **caractérisé en ce que** la charge solide comprend au moins deux poudres de granulométries moyennes différentes.

10. Procédé selon l'une quelconque des revendications 1 à 9, **caractérisé en ce que**, pour l'étape d'infiltration chimique en phase vapeur, on réalise les opérations de :
- mise en place de la pièce sur un ou plusieurs supports munis d'une couche de séparation en un matériau de moindre résistance mécanique que le matériau céramique obtenu par infiltration chimique en phase vapeur, la couche de séparation étant surmontée d'une couche de continuité réalisée dans ledit matériau céramique,
- réalisation de l'infiltration chimique en phase vapeur, et
- séparation de la pièce du ou des supports par rupture au sein de la souche de séparation, la continuité du dépôt céramique au niveau de la ou de chaque zone de supportage étant assurée par le matériau céramique de la couche de continuité restant en place sur la pièce.

11. Procédé selon la revendication 10, **caractérisé en ce que** la couche de séparation est en un matériau à structure feuilletée.

12. Procédé selon l'une quelconque des revendications 1 à 11, **caractérisé en ce que** le dépôt formé par infiltration chimique en phase vapeur est du carbure de silicium.

13. Procédé selon l'une quelconque des revendications 1 à 12, **caractérisé en ce que** l'on réalise un polissage de la surface de la pièce après l'étape d'infiltration chimique en phase vapeur.

14. Procédé de brasage de deux pièces en matériau composite thermostructural, **caractérisé en ce que** l'on réalise un traitement des surfaces à assembler des pièces selon un procédé conforme à l'une quelconque des revendications 1 à 13, et on réalise le brasage après interposition d'une brasure entre les surfaces traitées.

## Claims

1. A method of treating the surface of a part made of thermostructural composite material possessing a surface that is porous and of rough appearance, the method comprising applying onto the surface of the part a liquid composition containing a ceramic precursor polymer and a refractory solid filler, cross-linking the polymer, transforming the cross-linked polymer into ceramic by heat treatment, and subsequently forming a ceramic deposit by chemical vapour infiltration, the method being **characterised in that** prior to the step of chemical vapour infiltration, the surface of the part is shaved to return the part made of composite material to its initial shape so that the chemical vapour infiltration forms a deposit that fills in the residual micropores in the shaved surface of the part.

2. A method according to claim 1, **characterised in that** the shaving is performed after the precursor polymer has been cross-linked.

3. A method according to claim 2, **characterised in that** the shaving is performed after the precursor polymer has been ceramized by heat treatment.

4. A method according to claim 1, **characterised in that** the shaving is performed after the liquid composition has been applied and before the ceramic precursor has been crass-linlced.

5. A method according to any one of claims 1 to 4, **characterised in that** the liquid composition comprises a solvent for the ceramic precursor polymer.

6. A method according to any one of claims 1 to 5, **characterised in that** the liquid composition is applied in a plurality of layers.

7. A method according to any one of claims 1 to 6, **characterised in that** the solid filler comprises at least one refractory powder of mean grain size smaller than 100 µm.

8. A method according claim 7, **characterised in that** the mean grain size of the powder lies in the range 5 µm to 50 µm.

9. A method according to any one of claims 1 to 8, **characterised in that** the solid filler comprises at least two powders of different mean grain sizes.

10. A method according to any one of claims 1 to 9, **characterised in that**, for the chemical vapour infiltration step, the following operations are performed:
- placing the part on one or more supports each provided with a separation layer of material weaker than the ceramic material obtained by chemical vapour infiltration, the separation layer being surmounted by a continuity layer made out of said ceramic material;
- performing the chemical vapour infiltration; and
- separating the parts from the support(s) by breakage within the separation layer, continuity of the ceramic deposit in the vicinity of the or each support zone being provided by the ceramic material of the continuity layer that remains in place on the part.

11. A method according to claim 10, **characterised in that** the separation layer is made of a material of laminated structure.

12. A method according to any one of claims 1 to 11, **characterised in that** the deposit formed by chemical vapour infiltration is silicon carbide.

13. A method according to any one of claims 1 to 12, **characterised in that** the surface of the part is polished after the chemical vapour infiltration step.

14. A method of brazing together two parts of thermostructural composite material, the method being **characterised in that** the surfaces of the parts that are to be assembled together are subjected to treatment by a method in accordance with any one of claims 1 to 13, and the brazing is performed after interposing brazing material between the treated surfaces.

## Patentansprüche

1. Verfahren zur Behandlung der Oberfläche eines Teils aus Thermostruktur-Verbundmaterial, das eine poröse Oberfläche und eine rauhe Erscheinung hat, umfassend die Anwendung einer Flüssigzusammensetzung, die einen Polymerkeramikvorläufer und eine feste, feuerfeste Beschickung enthält, auf die Oberfläche des Teils, die Vernetzung des Polymers, die Überführung des vernetzten Polymers in Keramik durch thermische Behandlung und die anschließende Bildung einer Keramikabscheidung durch chemische Infiltration in Dampfphase, **dadurch gekennzeichnet, daß** vor dem Schritt der chemischen Infiltration in Dampfphase die Oberfläche des Teils abgeschliffen wird, um auf die anfängliche Geometrie des Teils aus Verbundmaterial derart zurückzukehren, daß durch chemische Infiltration in Dampfphase eine Abscheidung ausgebildet wird, die die verbleibende Mikroporosität der abgeschliffenen Oberfläche des Teils verschließt.

2. Verfahren nach Anspruch 1, **dadurch gekennzeichnet, daß** das Abschleifen nach Vernetzung des Polymervorläufers durchgeführt wird.

3. Verfahren nach Anspruch 2, **dadurch gekennzeichnet, daß** das Abschleifen nach Keramisierung des Polymervorläufers durch die thermische Behandlung durchgeführt wird.

4. Verfahren nach 1, **dadurch gekennzeichnet, daß** das Abschleifen nach Anwendung der Flüssigzusammensetzung und vor Vernetzen des Keramikvorläufers durchgeführt wird.

5. Verfahren nach einem der Ansprüche 1 bis 4, **dadurch gekennzeichnet, daß** die Flüssigzusammensetzung ein Lösungsmittel des Polymerkeramikvorläufers umfaßt.

6. Verfahren nach einem der Ansprüche bis 5, **dadurch gekennzeichnet, daß** die Flüssigzusammensetzung in mehreren Lagen aufgebracht wird.

7. Verfahren nach einem der Ansprüche 1 bis 6, **dadurch gekennzeichnet, daß** die feste Beschickung wenigstens ein feuerfestes Pulver enthält, dessen mittlere Granulometrie unter 100 µm liegt.

8. Verfahren nach einem der Ansprüche 1 bis 7, **dadurch gekennzeichnet, daß** die mittlere Granulometrie des Pulvers zwischen 5 und 50 µm liegt.

9. Verfahren nach einem der Ansprüche 1 bis 8, **dadurch gekennzeichnet, daß** die feste Beschickung wenigstens zwei Pulver mit unterschiedlichen mittleren Granulometrien umfaßt.

10. Verfahren nach einem der Ansprüche 1 bis 9, **dadurch gekennzeichnet, daß** man für den Schritt der chemischen Infiltration in Dampfphase die Vorgänge ausführt:
- Plazieren des Teils auf einem oder mehreren Trägern, die mit einer Trennlage aus Material mit geringerer mechanischer Beständigkeit als das durch chemische Infiltration in Dampfphase enthaltene Material versehen sind, wobei die Trennlage auf einer kontinuierlichen Lage aufgebracht ist, die aus dem Keramikmaterial ausgeführt wird,
- Durchführen der chemischen Infiltration in Dampfphase und
- Trennen des Stücks von dem oder den Trägern durch Bruch in der Trennlage, wobei die Kontinuität der keramischen Abscheidung auf der Ebene von der oder jeder Trägerzone durch das keramische Material der kontinuierlichen Lage sichergestellt wird, die an Ort und Stelle auf dem Teil verbleibt.

11. Verfahren nach Anspruch 10, **dadurch gekennzeichnet, daß** die Trennlage aus einem Material mit blättriger Struktur wird.

12. Verfahren nach einem der Ansprüche 1 bis 11, **dadurch gekennzeichnet, daß** die Abscheidung, die durch chemische Infiltration in Dampfphase gebildet wird, Siliziumcarbid ist.

13. Verfahren nach einem der Ansprüche 1 bis 12, **dadurch gekennzeichnet, daß** man ein Polieren der Oberfläche des Teils nach dem Schritt der chemischen Infiltration in Dampfphase durchführt.

14. Lötverfahren von zwei Teilen aus Thermostruktur-Verbundmaterial, **dadurch gekennzeichnet, daß** man eine Oberflächenbehandlung der zusammenzusetzenden Oberflächen der Teile gemäß einem Verfahren nach einem der Ansprüche 1 bis 13 durchführt und man das Löten nach Einfügen einer Lötstelle zwischen den behandelten Oberflächen ausführt.
